# EUROPÄISCHE PATENTSCHRIFT

(11) **EP 1 915 229 B1**
(45) Veröffentlichungstag und Bekanntmachung des Hinweises auf die Patenterteilung: **07.03.2012**
(21) Anmeldenummer: 06775860.7
(22) Anmeldetag: 16.08.2006
(51) Int. Cl.: B23H 7/26, F16C 11/12

(54) **LINEARFÜHRUNG**
LINEAR GUIDE
GUIDAGE LINEAIRE

(30) Priorität: 19.08.2005 DE 102005039279
(43) Veröffentlichungstag der Anmeldung: 30.04.2008
(73) Patentinhaber: MTU Aero Engines GmbH, 80995 München (DE)
(72) Erfinder: GEIGER, Harald, 74405 Gaildorf (DE); LAUN, Jochen, 74405 Gaildorf (DE); WIDMANN, Thomas, 73453 Untergröningen (DE)
(86) Internationale Anmeldenummer: PCT/DE2006/001431
(87) Internationale Veröffentlichungsnummer: WO 2007/022752

(56) Entgegenhaltungen:
- EP-A- 1 097 774
- EP-A- 1 493 530
- DE-A1- 10 252 118
- JP-A- 2002 154 013

## Beschreibung

Die Erfindung betrifft eine Linearführung nach dem Oberbegriff des Anspruchs 1. Aus der JP2002154013 ist eine gattungsbildende Linearführung bekannt. Linearführungen für Pinolen von Einrichtungen zur elektrochemischen Metallbearbeitung sind hinreichend bekannt. In der präzisen elektrochemischen Metallbearbeitung ergeben sich Bearbeitungsspaltgrößen von kleiner 100 µm. Dieser sehr kleine Spalt zwischen Werkstück und Kathode lässt bei einem kontinuierlichen Vorschub fast keinen Elektrolytaustausch zu. Diesem Nachteil kann mit einer Schwingung der Kathode kleiner Amplitude und einer entsprechenden Frequenz begegnet werden, wobei die Schwingung der eigentlichen Vorschubbewegung der Kathode in das zu bearbeitende Werkstück überlagert wird. Damit kann ein hinreichender Austausch des Elektrolytes im Bearbeitungsspalt erreicht werden, um den Bearbeitungsprozess zu optimieren.

Aufgrund sehr hoher Bearbeitungsgenauigkeiten erfordert die Linearführung der Schwingungsbewegung der Pinole, welche die Kathode trägt bzw. führt, möglichst spielfreie und damit vorgespannte Führungselemente mit einer hohen Steifigkeit. Für den kontinuierlichen Vorschub können zum Beispiel Kugelführungen eingesetzt werden, die jedoch für den oszillierenden Kathodenträger, der mit entsprechender Amplitude und Frequenz schwingt, nicht geeignet sind. Aufgrund der kleinen Bewegungsamplituden ergibt sich für Wälzführungen keine hinreichende Abrollbewegung, was zu einer Mangelschmierung der Wälzkörper und damit zum Trockenlaufen bzw. zu einem erhöhten Verschleiß bzw. zu einem Festfressen der Führung führt. Die Problematik betrifft ebenfalls Gleitführungskonzepte, da auch hier keine hinreichende hydrodynamische Schmierwirkung erzielbar ist. Andere Lösungen betreffen hydrostatische Lager, Luftlager oder magnetische Lager. Jedoch scheidet die Großzahl der möglichen Lösungen für Lagerungen der Pinole aus technischen oder wirtschaftlichen Gründen aus.

In der EP 1 097 774 A1 ist eine Einrichtung zur elektrochemischen Bearbeitung von Metallen offenbart, welche zwei in einem Maschinengehäuse entlang einer definierten Bahn, insbesondere entlang einer gradlinigen Achse, relativ zueinander geführte und verfahrbare Bauteile umfasst, zwischen deren oder ggf. von darauf aufgesetzten Zusatzteilen sich gegenüberliegenden Flächen ein enger Arbeitsspalt einstellbar ist. Dabei sind Mittel vorgesehen, um zumindest einem eine solche Begrenzungsfläche aufweisenden Bestandteil eines der beiden Bauteile unabhängig vom Zustellantrieb eine periodische wegbegrenzte Schwingungsbewegung aufzuerlegen, um dadurch den jeweils eingestellten Arbeitsspalt periodisch zu verändern. Der wegbegrenzt periodisch schwingend angetriebene, die eine Begrenzungsfläche des Spaltes aufweisende und als Kathode ausgeführte Bestandteil des einen Bauteils ist dabei so geführt, dass diese Bewegung nur in Richtung der definierten Bahn erfolgt und der periodische Antrieb auf den genannten Bestandteil wirkt. Dabei erfolgt die wegbegrenzte schwingend periodische Bewegung der Kathode durch eine elastische Verformung mindestens einer in einer senkrechten Ebene zur Bahn angeordneten Membran. Dabei ist die Pinole, welche die Kathode trägt, über zwei Membranen geführt. Nachteilhafterweise kann das Verhältnis der radialen Steifigkeit zur axialen Steifigkeit (und damit der Auslenkkraft) nicht beliebig variiert werden. Die Auslenkung dieser Führung beruht auf strukturellen Dehnungen in den Membranen und lässt sich nur begrenzt vergrößern. Die Bauform stellt sich als relativ groß, schlecht skalierbar und bezüglich der erforderlichen Teilestruktur umfangreich dar.

Es ist daher die Aufgabe der vorliegenden Erfindung, eine Lineärführung für die periodische Bewegung einer Pinole für eine Einrichtung zur elektrochemischen Metallbearbeitung zu schaffen, welche hinsichtlich der radialen bzw. axialen Steifigkeit beliebig variierbar ist, begrenzt vergrößerbar ist und eine kleinbauende, skalierbare Ausführung mit einer einfachen Teilestruktur aufweist.

Diese Aufgabe wird erfindungsgemäß durch eine Einrichtung zur elektrochemischen Metallbearbeitung mit den Merkmalen des Patentanspruchs 1 gelöst. Vorteilhafte Weiterbildungen der Erfindung sind in den abhängigen Ansprüchen angegeben.

Die Erfindung schließt die technische Lehre ein, dass die Pinole mit mehreren Lenkern mit dem Maschinengestell verbunden ist, wobei die Lenker im kraftlosen, nicht ausgelenkten Zustand im Wesentlichen senkrecht zur Längsachse der Pinole angeordnet sind und wobei die Lenker an der Anbindungsstelle zur Pinole sowie an der Anbindungsstelle zum Maschinengestell ein Festkörpergelenk aufweisen, um über dieses die periodische Linearbewegung der Pinole zu ermöglichen.
Die Nachgiebigkeiten dieser Festkörpergelenke basieren auf Elastizitäten ihrer Strukturen, die durch gezielte Ausdünnung des Materials gebildet werden und im Bereich ihrer elastischen Verformung abhängig von der Auslenkung eine Rückstellkraft hervorrufen.
Diese Lösung bietet den Vorteil, dass eine Linearführung für die periodische Bewegung einer Pinole in einer Einrichtung zu elektrochemischen Metallbearbeitung ein variierbares Verhältnis zwischen der axialen und radialen Steifigkeit aufweist. Dieses Verhältnis lässt sich insbesondere durch eine beliebig änderbare axiale Steifigkeit einstellen, in dem die Steifigkeit der elastisch verformten Teile bzw. Bereiche des Festkörpergelenkes angepasst wird. Zu dem kann die Anzahl der Anbindungsstellen bzw. die Anzahl der Lenker zwischen dem Maschinengestell und der axial bewegten Pinole verändert werden, wobei bei einer größeren Anzahl von Lenkern die Steifigkeit zunimmt und bei einer geringeren Anzahl von Lenkern die Steifigkeit abnimmt. Somit kann insbesondere die Steifigkeit dem oszillierenden Feder-Masse-System angepasst werden, um in Abhängigkeit der Masse der an der Pinole angeordneten Kathode die Schwingung bei oder nahe der Eigenkreisfrequenz des Feder-Masse-Systems zu realisieren. Als weiterer wesentlicher Vorteil kann der geringe Bauraum der Linearführung genannt werden, da insbesondere die Anordnung von Metallmembranen entfällt.

Die erfindungsgemäße Anordnung lehnt am Prinzip einer kinematischen Kette an, wobei aufgrund der kleinen Auslenkungen Festkörpergelenke nach dem Prinzip eines Biegebalkens einsetzbar sind. Die Nachgiebigkeiten dieser Festkörpergelenke basieren auf Elastizitäten ihrer Strukturen, die durch gezielte Ausdünnung des Materials gebildet werden und im Bereich ihrer elastischen Verformung abhängig von der Auslenkung eine Rückstellkraft hervorrufen.

Eine vorteilhafte Anordnung der die Linearführung bildenden Lenker sieht vor, dass die Pinole zumindest zwei Lagerebenen aufweist, wobei jede Lagerebene aus zumindest einem Lenker, vorzugsweise aus zwei Lenkern und besonders bevorzugt aus einer Vielzahl von Lenkern gebildet ist. Eine gleichverteilte Anordnung von Lenkern über dem Umfang der Pinole ermöglicht eine radialsymmetrische Steifigkeit der Pinole gegenüber dem Maschinengestell. Somit können die Lenker bei einer dreifachen Lenkeranordnung in jeder Lagerstelle einen Winkel von 120° zueinander einschließen, wobei der Winkel bei vier über dem Umfang angeordneten Lenkern 90° beträgt und bei einer höheren Anzahl von Lenkern die Lenker untereinander gleiche Winkel einschließen. Die radialsymmetrische Steifigkeit der Pinole gegenüber dem Maschinengestell gewährleistet eine hohe Führungsgenauigkeit, welche sich positiv auf die erzielbaren Bearbeitungsgenauigkeiten auswirkt.

Vorteilhafterweise weisen die zumindest zwei Lagerebenen in Richtung der Längsachse der Pinole einen großen Abstand zueinander auf, um die Steifigkeit der Linearführung zu optimieren. Bei einem großen Abstand der Lagerebenen zueinander können unerwünschte Auslenkungen der Pinole in radialer Richtung minimiert werden. Diese vorteilhafte Anordnung gewährleistet eine minimale Längskraft in den Lenkern, so dass diese darüber hinaus kleiner auslegbar sind, um eine platzsparende Anordnung zu ermöglichen.

Eine vorteilhafte Ausführungsform der erfindungsgemäßen Linearführung sieht vor, dass die Festkörpergelenke für eine elastische Bewegung Biegebalken aufweisen, wobei diese durch seitlich zum Biegebalken eingebrachte Aussparungen gebildet sind. Die Biegebalken stellen dabei den elastischen Bereich des Festkörpergelenkes dar, in dem durch eine elastische Verformung des Werkstoffes der Festkörpergelenke eine Auslenkbewegung des bewegten Teils des Festkörpergelenks gegenüber dem ruhenden Teil des Festkörpergelenks realisierbar ist. Dabei kann die Steifigkeit des Festkörpergelenks durch die Breite der Biegebalken variiert werden, wobei die Steifigkeit mit geringerer Breite des Biegebalkens abnimmt. Die Festkörpergelenke können dabei als Blattfeder ausführt sein, wobei der Biegebalken einteilig in die Lenker übergeht. Damit kann vorteilhafterweise eine einfache Teilestruktur erzielt werden, ohne dass die Festköpergelenke an die Lenker montiert werden müssen. Der Übergang des Biegebalkens in den Lenker ermöglicht eine einteilige Ausführung der Anbindungsstelle mit dem Lenker, wobei ein Lenker zumindest zwei Festkörpergelenke aufweist, so dass dieser sowohl an der Seite des Maschinengestells als auch an der Seite der Pinole angeordnet werden kann. Die Geometrie bzw. die Auslegung des Lenkers kann dabei so gewählt werden, dass sich die elastische Verformung entweder in den Lenker fortsetzt oder auf den Bereich des Biegebalkens im Festkörpergelenk beschränkt.

Eine mögliche Ausführungsform der Aussparungen in den Festkörpergelenken sieht vor, dass diese eine elliptische, eine kreisförmige, eine viereckige und /oder dreieckige Kontur aufweisen. In Abhängigkeit von der erforderlichen Steifigkeit des Biegebalkens kann die Geometrie der seitlich am Biegebalken angeordneten Aussparungen angepasst werden. Eine elliptische oder eine kreisförmige Aussparung führt dabei zu einem weichen Übergang des Biegebalkens des Festkörpergelenks in den festen bzw. in den bewegten Teil des Festkörpergelenkes, wohingegen dreieckige oder viereckige Aussparungen einen Querschnittsprung hervorrufen. Abhängig von der Größe der Aussparung kann mit einer länglichen Geometrie des Biegebalkens eine geringe Steifigkeit erzielt werden, wohingegen eine kurze Länge des Biegebalken eine hohe Steifigkeit bedingt.

Eine weitere vorteilhafte Ausführungsform der Erfindung sieht vor, dass die Lenker mit einer Ausgleichsbrücke verbunden sind, wobei wenigstens ein Lenker zwischen der Ausgleichsbrücke und dem Maschinengestell und wenigstens ein Lenker zwischen Ausgleichsbrücke und der Pinole angeordnet ist. Das Funktionsprinzip der Anordnung mit einer Ausgleichsbrücke beruht auf dem Zusammenwirken von Parallellenkern, wobei je zwei Lenker in gleiche Richtung ausgelenkt werden. Der Vorteil dieses Ausführungsbeispiels liegt in der Verdoppelung des Weges, welche die Pinole in axialer Richtung zurücklegen kann, ohne dass eine erhebliche Vergrößerung des Bauraums notwendig ist. Darüber hinaus besteht die Möglichkeit, die Anbindungsstelle des Lenkers am Maschinengestell nahe der Längsachse der Pinole vorzusehen, da im nichtausgelenkten Zustand die Lenker zwischen der Pinole und der Ausgleichsbrücke mit den Lenkern zwischen der Ausgleichsbrücke und dem Maschinengestell parallel verlaufen. Durch diese Anordnung kann gegenüber der direkten Anbindung der Pinole über Lenker zum Maschinengestell die Nachgiebigkeit erhöht werden, so dass bei einer gleichen Ausführung der Lenker zwischen Pinole und Ausgleichsbrücke bzw. zwischen Ausgleichsbrücke und Maschinengestell bei gleicher Auslenkung die Auslenkkraft halbierbar ist bzw. bei einer gegebenen Auslenkkraft der Weg, den die Pinole in axiale Richtung zurücklegt, verdoppelt werden kann. Die Ausgleichsbrücke kann dabei mehrfach um die Pinole gleich verteilt angeordnet sein und einen stabförmigen Körper umfassen, oder als zylindrischer Hohlkörper die Pinole aufnehmen. Die Anbindungsstellen der Lenker in den verschiedenen Lagerebenen können dabei an einer gemeinsamen Ausgleichsbrücke anordnet sein, so dass die Ausgleichsbrücke durch die Verbindung mit dem Maschinengestell über die Lenker ebenfalls axial geführt ist.

Vorteilhafterweise sind die Festkörpergelenke und/oder Lenker aus einem Flachmaterial hergestellt, wobei die Herstellung ein Laserstrahltrennverfahren, ein Erodierverfahren, ein PECM- oder Wasserstrahlschneidverfahren umfasst. Die Ebene des Flachmaterials ist dabei so zwischen der Pinole und dem Maschinengestell angeordnet, dass diese sowohl durch die Längsachse der Lenker als auch durch die Bewegungsrichtung der Pinole aufgespannt wird. Die Ausführung der Festkörpergelenke aus einem Flachmaterial ermöglicht die Anwendung eines Herstellungsverfahren aus dem Bereich der Blechbearbeitung, wobei ein Laserstrahltrennverfahren, ein Erodierverfahren, ein PECM-oder Wasserstrahlschneidverfahren sehr genaue Fertigungsmöglichkeiten bieten, und wobei das PECM-Verfahren ein elektrochemisches Abtragverfahren mit gepulstem elektrischem Strom beschreibt. Eine vorteilhafte Ausführungsform der Festkörpergelenke kann zu dem eine Austauschbarkeit des Biegebalkens bieten, um die Steifigkeit der Festkörpergelenke und damit der Linearführung der Pinole gegenüber dem Maschinengestell den Erfordernissen hinsichtlich der Masse der Kathode bzw. der gewünschten Schwingungsamplitude der oszillierenden Bewegung anzupassen.

In Abhängigkeit der erforderlichen Schwingungsform ist vorgesehen, dass die periodische Linearbewegung eine Oszillationsbewegung ist, wobei die Oszillationsbewegung einen Hub von < 5mm aufweist. Eine weitere Ausführung der Oszillationsbewegung sieht einen Hub von < 1mm bzw. einen Hub von < 0,1mm vor. Die Größe des Hubes der Linearbewegung ist dabei an den Prozess der elektrochemischen Metallbearbeitung angepasst, wobei bei einem größeren Hub ein größerer Austausch des Elektrolytes im Bearbeitungsspalt erzielbar ist, wohingegen bei einem kleineren Hub eine höhere Bearbeitungsgenauigkeit erreicht werden kann. Hinsichtlich der Frequenz der Oszillationsbewegung umfasst diese einen Wert von < 500Hz, wobei ein weiteres Ausführungsbeispiel eine Oszillationsbewegung mit einer Frequenz von < 50Hz und ein nächstes Ausführungsbeispiel einer Oszillationsbewegung mit einer Frequenz von < 10Hz aufweist. Eine größere Frequenz ist bei einer kleineren bewegten Masse erzielbar, wobei eine kleinere Frequenz bei größeren Massen einstellbar ist. Die Steifigkeit des Biegebalkens im Festkörpergelenk kann dabei der erforderlichen Frequenz der Oszillationsbewegung angepasst werden, wobei eine größere Steifigkeit eine größere Frequenz und eine kleinere Steifigkeit eine kleinere Frequenz bedingt.

Aus konstruktiven Gründen ist es von besonderem Vorteil, dass die Festkörpergelenke und/oder die Lenker einen metallischen Werkstoff aus der Gruppe umfassend einen Federstahl und bevorzugt einen Edelstahl aufweisen. Ein metallischer Werkstoff bietet den Vorteil der Herstellbarkeit der Festkörpergelenke bzw. der Lenker mittels der oben genannten Herstellungsverfahren, wobei ein Federstahl die Anforderung der elastischen Eigenschaften des Biegebalkens erfüllt. Die Wahl eines Edelstahl als Werkstoff für die Festkörpergelenke bzw. die Lenker ermöglicht zu dem eine korrosionsfreie Ausführung der Linearführung, wobei weitere Werkstoffe wie spezielle, hochelastische Keramiken weitere mögliche Materialien darstellen. Die Festkörpergelenke können dabei als Blattfeder ausgeführt sein, wobei der Biegebalken einteilig in den Lenker übergeht. Diese Ausführungsvariante führt zu einem vereinfachen Aufbau, bei dem der Lenker, das maschinengestellseitige Festkörpergelenk und das pinolenseitige Festkörpergelenk zu einem Biegebalken abstrahiert werden können, wobei sich die elastische Verformung zur Erzielung der Oszillationsbewegung über der gesamten Länge des Lenkers erstreckt.

Nachfolgend wird eine vorteilhafte Ausführungsform der vorliegenden Erfindung zusammen mit der Beschreibung der Figuren näher dargestellt. Es zeigt:
- Fig. 1: eine schematische Darstellung einer Linearführung einer Pinole, welche über Lenker axial beweglich am Maschinengestell angebunden ist;
- Fig. 2: ein Festkörpergelenk mit einem Biegebalken, welcher durch zwei kreisförmige Aussparungen gebildet ist;
- Fig. 3a: ein Ausführungsbeispiel einer Linearführung mit einer Ausgleichsbrücke im nicht ausgelenkten Zustand, welche über Lenker mit der Pinole bzw. dem Maschinengestell angebunden ist; und
- Fig. 3b: einen Teil des in Figur 3a dargestellten Ausführungsbeispiels der Linearführung mit einer Ausgleichsbrücke in einem ausgelenkten Zustand.

Bei den Figuren handelt es sich lediglich um beispielhafte schematische Darstellungen.

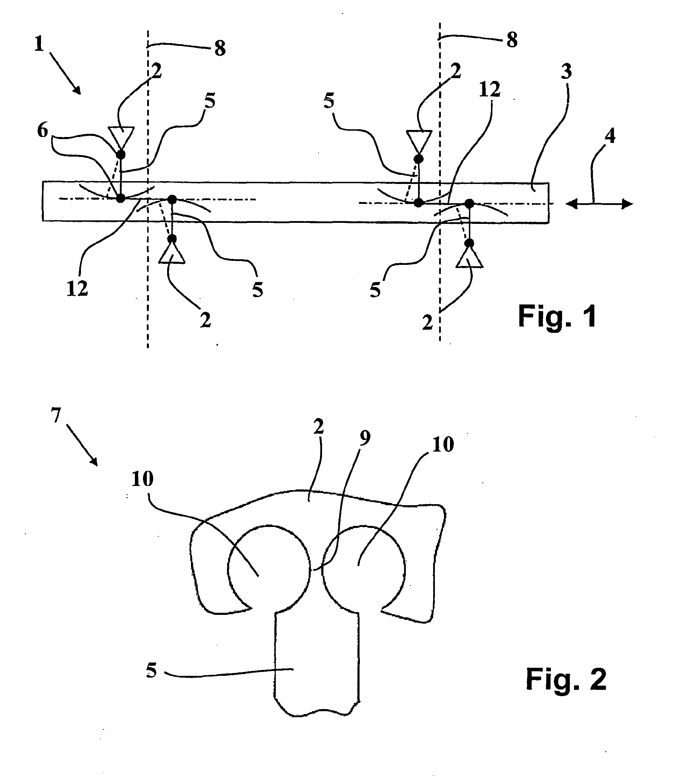

Die in Figur 1 gezeigte Linearführung 1 führt eine auf einer Längsachse 4 axial bewegliche Pinole 3 gegenüber einem Maschinengestell 2, wobei das Maschinengestell 2 schematisch durch insgesamt vier Festlager dargestellt ist. Die Festlager sind dabei als ortsfeste Auflager zu verstehen, so dass die axiale Bewegung der Pinole 3 entlang der Längsachse 4 gegenüber dem ruhenden Maschinengestell 2 erfolgt, wobei die Pinole 3 schematisch durch einen in der Bildebene horizontal verlaufenden rechteckigen Balken vereinfacht dargestellt ist. Um das Wirkprinzip der mittels der Lenker 5 der Linearführung 1 ausgeführten Führungsprinzip zu verdeutlichen, ist zunächst auf abstrahierte Weise eine kinematische Kette dargestellt, wobei diese zwei Lenker 5 und eine Koppel 12 umfasst. Die Lenker 5 sind jeweils an einer Seite mit dem ortsfest angeordneten Maschinengestell 2 verbunden, wobei die frei beweglichen Enden der Lenker 5 durch eine Koppel 12 verbunden sind. Gemäß der Anordnung der kinematischen Kette kann bei kleinen Auslenkungen der Lenker 5 eine lineare und hinsichtlich des Ausführungsbeispiels horizontal verlaufende Bewegung der Koppel 12 in Richtung der Längsachse der Koppel 12 erfolgen. Bei Auslenkungen, welche bezogen auf die Länge der Lenker 5 sehr klein sind, kann eine Drehbewegung der Koppel 12 vernachlässigt werden, so dass eine horizontale Linearbewegung annehmbar ist. Dabei kann angenommen werden, dass die Koppel 12 mit der Pinole 3 einteilig ausgeführt ist. Erfolgt nun eine horizontale Schiebung der Pinole 3 entlang der Längsachse 4, so folgt ebenfalls eine kleine Verschiebung der Koppel 12 in ihrer Längsrichtung. Damit schwenken die Lenker 5 um das an der Seite des Maschinengestells 2 angebundene Gelenk mit kleinen Auslenkungswinkeln. Die Gelenke bilden dabei die Anbindungsstellen 6, welche die Lenker 5 einerseits mit dem Maschinengestell 2 und andererseits mit der Pinole 3 verbinden. Bei einer direkten Anbindung der Lenker 5 über die Anbindungsstellen 6 an die Pinole 3 kann diese direkt als Koppel 12 betrachtet werden und einen Bestandteil der kinematischen Kette bilden. Somit können die Lenker 5 jeweils in einer Lagerebene 8 angeordnet werden (in Figur 1 nicht dargestellt), so dass die Koppel 12 entfallen kann. In Figur 1 sind zwei voneinander getrennt angeordnete Lagerebenen 8 vorhanden, um eine Linearführung 1 zu schaffen, welche die Pinole 3 in zumindest zwei Ebenen mit dem Maschinengestell 2 verbindet. Die horizontale Auslenkung der Pinole 3 in Richtung der Längsachse 4 kann eine Oszillationsbewegung mit einem Auslenksweg von beispielsweise <0,1mm oder <5mm umfassen. Eine mögliche Oszillationsfrequenz liegt dabei im Bereich von beispielsweise <10Hz oder <500Hz. Aufgrund der kleinen Auslenkungen der Gelenke in den Anbindungsstellen 6 können diese als Festkörpergelenke ausgeführt sein, wobei diese bei einer elastischen Verformung aufgrund der Auslenkung eine Auslenkkraft in die Lenker 5 bzw. in die Pinole 3 einleiten, und bilden gemeinsam mit der Pinole 3 ein Feder-Masse-System, welches in Richtung der Längsachse 4 schwingungsfähig ist. Die Steifigkeit des Festkörpergelenks in Oszillationsrichtung und in Querrichtung, d.h. senkrecht auf der Längsachse 4, kann dabei beliebig variiert und angepasst werden. Aufgrund der Anordnung der Linearführung mit Festkörpergelenken ist diese im Wesentlichen verschleißfrei, und es kann in Abhängigkeit von der Anregungsrichtung der Oszillationsbewegung entweder eine lineare Oszillationsbewegung in Richtung der Längsachse 4, als auch eine Oszillationsbewegung mit einer Bewegungskomponente senkrecht zur Längsachse 4 ermöglicht werden. Weiterhin ist mit der erfindungsgemäßen Anordnung der Gelenke die Möglichkeit gegeben, hinsichtlich der elektrochemischen Metallbearbeitung Hinterschnitte zu realisieren. Weiterhin können die Bewegungsbahnen für die Oszillation einem optimalen Elektrolytaustausch angepasst werden. Darüberhinaus kann eine Skalierbarkeit der Größe der Oszillationsbewegung bzw. der Höhe der Oszillationsfrequenz durch eine gezielte Anpassung der Festkörpergelenke ermöglicht werden.

In Figur 2 ist ein Festkörpergelenk 7 dargestellt, welches eine Anbindungsstelle 6 (Figur 1) zwischen dem Maschinengestell 2 und dem Lenker 5 bzw. zwischen der Pinole 3 und dem Lenker 5 bildet. Die Gelenkbewegung erfolgt dabei aufgrund einer elastischen Biegung in einem Biegebalken 9, welcher hinsichtlich seiner Breite durch zwei Aussparungen 10 gebildet wird. Das Festkörpergelenk 7 kann dabei aus einem metallischen Werkstoff in Form eines Stahlbleches bestehen, wobei die Aussparungen 10 beispielsweise durch ein Laserstrahltrennverfahren, ein Erodierverfahren, ein PECM-Verfahren oder ein Wasserstrahlschneiden in das Blechmaterial eingebracht werden können. Das Blechmaterial kann dabei aus jedem Material hergestellt sein, welches zumindest einen hinreichenden elastischen Bereich aufweist, um eine ausreichende Verformung des Biegebalkens 9 ohne eine plastische Verformung zu ermöglichen. Dabei kann insbesondere ein Federstahl verwendet werden, welcher darüber hinaus als Edelstahl gewählt werden kann, um eine Korrosionsbeständigkeit zu bieten. Gemäß dem vorliegenden Ausführungsbeispiel ist das Festkörpergelenk 7 mit einem Bereich des Maschinengestells 2 und dem Lenker 5 als einteiliges Bauteil dargestellt, wobei das Festkörpergelenk 7 ebenfalls mehrteilig ausgeführt sein kann, um eine Austauschbarkeit des Biegebalkens 9 zu ermöglichen. Damit kann vorteilhafterweise durch einen einfachen Austausch des Biegebalkens 9 die Steifigkeit und damit das Schwingungsverhalten der Oszillationsbewegung angepasst werden. Die Aussparungen 10 sind gemäß dem vorliegenden Ausführungsbeispiel als kreisförmige Ausformungen dargestellt, wobei diese ebenfalls elliptisch, viereckig und/oder dreieckig ausgeführt sein können.

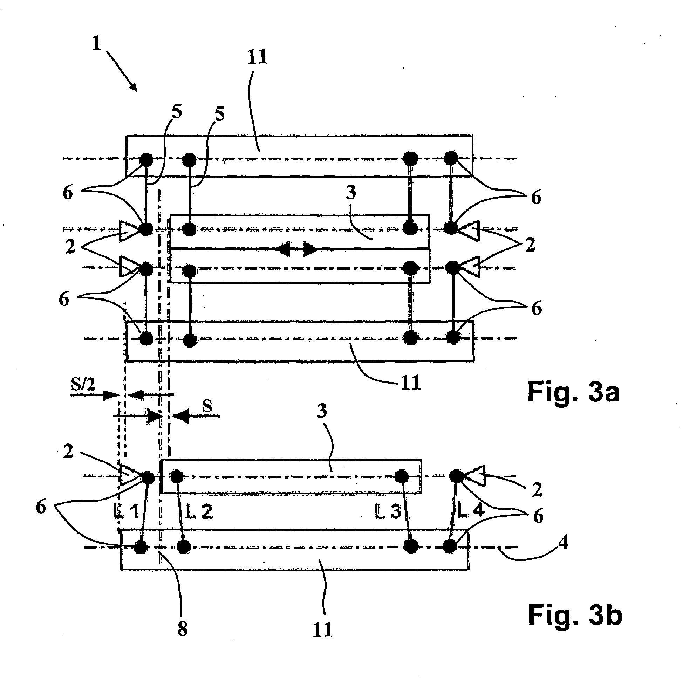

Die Figuren 3a und 3b stellen eine Linearführung 1 mit einer Ausgleichsbrücke 11 dar, welche über Lenker 5 zwischen der Pinole 3 und dem Maschinengestell 2 angeordnet ist. Das Maschinengestell 2 ist wiederum durch ortsfeste Auflager schematisch dargestellt. Die Anordnung der Lenker 5, der Ausgleichsbrücke 11 sowie die jeweilige Anbindung der Lenker 5 über die Anbindungsstellen 6 kann auch hier als kinematische Kette angesehen werden, welche bezüglich der Pinole 3 zwei getrennt voneinander angeordnete Lagerebenen 8 bilden (rechtseitig nicht dargestellt). In Figur 3a ist die Linearführung 1 in einem nicht ausgelenkten Zustand gezeigt, wobei Figur 3b eine Auslenkung der Pinole 2 in Richtung der Längsachse 4 zeigt. Figur 3b gibt dabei den unteren Teil der Linearführung 1 aus Figur 3a wieder, wobei die Pinole 3 in Figur 3b der unteren Hälfte der Pinole 3 aus Figur 3a entspricht (als Halbschnitt). Die Ausgleichsbrücke 11 in Figur 3b entspricht der unteren Ausgleichsbrücke 11 aus Figur 3a. In Figur 3b ist die Pinole 3 in einem gegenüber dem Maschinengestell 2 ausgelenkten Zustand gezeigt, wobei die Linearbewegung der Auslenkung S entspricht. Dabei wird die Ausgleichsbrücke 11 um den Weg S/2 ausgelenkt, so dass die Lenker L1 und L4 sowie die Lenker L2 und L3 jeweils parallel zueinander ausgelenkt werden. Damit kann bei einer gegebenen Auslenkung S die Auslenkungskraft halbiert werden, womit die Steifigkeit der Linearführung halbiert wird bzw. die Nachgiebigkeit verdoppelt wird. Damit ist die Möglichkeit gegeben, die Steifigkeit der Linearführung hinsichtlich der linearen Auslenkung der Pinole 3 in Richtung der Längsachse 4 den Erfordernissen der Anwendung anzupassen. Die Ausgleichsbrücke 11 kann dabei so ausgeführt sein, dass diese die Anordnung der Lenker 5 in den jeweiligen Lagerebenen 8 auf der Seite der Ausgleichsbrücke 11 miteinander verbinden, so dass diese einteilig ausgeführt ist. Zur Erreichung einer Auslenkung S kann damit die Verformung bzw. der Auslenkwinkel der Biegebalken 9 in den Festkörpergelenken 7, welche die Anbindungsstellen 6 bilden, halbiert werden. Die Lagerebenen 8 sowie die Längsachsen 4 sind durch strichpunktierte Linien dargestellt. Die Auslenkung S ist in Figur 3b gegenüber der in Figur 3a nicht ausgelenkten Linearführung durch gestrichelte Linien dargestellt, wobei das Maß mit Pfeilen an den Enden der Pinole 3 bzw. an den Ausgleichsbrücken 11 abgetragen ist.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

## Patentansprüche

1. Linearführung (1), insbesondere für eine Einrichtung zur elektrochemischen Metallbearbeitung, welche eine Linearbewegung einer in einem Maschinengestell (2) periodisch bewegten Pinole (3) führt, um einen Arbeitsspalt zwischen einer an der Pinole (3) angeordneten Kathode und einem werkstück in Richtung der Längsachse (4) der Pinole (3) periodisch zu verändern, wobei die Pinole (3) mit mehreren Lenkern (5) mit dem Maschinengestell (2) verbunden ist, wobei die Lenker (5) im kraftlosen, nicht ausgelenkten Zustand im Wesentlichen senkrecht zur Längsachse (4) der Pinole (3) angeordnet sind und wobei die Lenker (5) an der Anbindungsstelle (6) zur Pinole (3) sowie an der Anbindungsstelle (6) zum Maschinengestell (2) ein Festkörpergelenk (7) aufweisen, um über dieses die periodische Linearbewegung der Pinole (3) zu ermöglichen **dadurch gekennzeichnet dass** die Nachgiebigkeiten dieser Festkörpergelenke auf Elastizitäten ihrer Strukturen basieren, die durch gezielte Ausdünnung des Materials gebildet werden.

2. Linearführung (1) nach Anspruch 1,
**dadurch gekennzeichnet, dass** die Pinole (3) zumindest zwei Lagerebenen (8) aufweist, wobei jede Lagerebene (8) aus zumindest einem Lenker (5), vorzugsweise aus zwei Lenkern (5) und besonders bevorzugt aus einer Vielzahl von Lenkern (5) gebildet ist.

3. Linearführung (1) nach Anspruch 2,
**dadurch gekennzeichnet, dass** die zumindest zwei Lagerebenen (8) in Richtung der Längsachse (4) der Pinole (3) einen großen Abstand zueinander aufzuweisen, um die Steifigkeit der Linearführung (1) zu optimieren.

4. Linearführung (1) nach zumindest einem der vorgenannten Ansprüche,
**dadurch gekennzeichnet, dass** die Festkörpergelenke (7) für eine elastische Bewegung Biegebalken (9) aufweisen, wobei diese durch seitlich zum Biegebalken (9) eingebrachte Aussparungen (10) gebildet sind.

5. Linearführung (1) nach zumindest einem der vorgenannten Ansprüche,
**dadurch gekennzeichnet, dass** die Aussparungen (10) eine elliptische, eine kreisförmige, eine viereckige und/ oder eine dreieckige Kontur aufweisen.

6. Linearführung (1) nach zumindest einem der vorgenannten Ansprüche,
**dadurch gekennzeichnet, dass** die Festkörpergelenke (7) als Blattfeder ausgeführt sind, wobei der Biegebalken (9) einteilig in den Lenker (5) übergeht.

7. Linearführung (1) nach zumindest einem der vorgenannten Ansprüche,
**dadurch gekennzeichnet, dass** die Lenker (5) mit einer Ausgleichsbrücke (11) verbunden sind, wobei wenigstens ein Lenker (5) zwischen der Ausgleichsbrücke (11) und dem Maschinengestell (2) und wenigstens ein Lenker (5) zwischen der Ausgleichsbrücke (11) und der Pinole (3) angeordnet ist.

8. Linearführung (1) nach zumindest einem der vorgenannten Ansprüche,
**dadurch gekennzeichnet, dass** die Festkörpergelenke (7) und /oder die Lenker (5) aus einem Flachmaterial hergestellt sind, wobei die Herstellung ein Laserstrahltrennverfahren, ein Erodierverfahren, ein PECM- oder ein Wasserstrahlschneidverfahren umfasst.

9. Linearführung (1) nach zumindest einem der vorgenannten Ansprüche,
**dadurch gekennzeichnet, dass** die periodische Linearbewegung der Pinole (3) eine Oszillationsbewegung ist, wobei die Oszillationsbewegung der Pinole (3) einen Hub von <5mm aufweist.

10. Linearführung (1) nach Anspruch 9,
**dadurch gekennzeichnet, dass** die Oszillationsbewegung der Pinole (3) einen Hub von <1mm aufweist.

11. Linearführung (1) nach Anspruch 9,
**dadurch gekennzeichnet, dass** die Oszillationsbewegung der Pinole (3) einen Hub von <0,1mm aufweist.

12. Linearführung (1) nach Anspruch 9,
**dadurch gekennzeichnet, dass** die Oszillationsbewegung der Pinole (3) eine Frequenz von <500Hz aufweist.

13. Linearführung (1) nach Anspruch 9,
**dadurch gekennzeichnet, dass** die Oszillationsbewegung der Pinole (3) eine Frequenz von <50Hz aufweist.

14. Linearführung (1) nach Anspruch 9,
**dadurch gekennzeichnet, dass** die Oszillationsbewegung der Pinole (3) eine Frequenz von <10Hz aufweist.

15. Linearführung (1) nach zumindest einem der vorgenannten Ansprüche,
**dadurch gekennzeichnet, dass** die Festkörpergelenke (7) und /oder die Lenker (5) einen metallischen Werkstoff aus der Gruppe umfassend einen Federstahl und bevorzugt einen Edelstahl aufweisen.

## Claims

1. A linear guide (1), in particular for a device for electrochemical metal working, that guides a linear movement of a quill (3) periodically moved in a machine frame (2) in order to vary periodically a working gap between a cathode arranged on the quill (3) and a workpiece in the direction of the longitudinal axis (4) of the quill (3), wherein the quill (3) is connected to the machine frame (2) by a plurality of guide rods (5), wherein the guide rods (5) are arranged substantially perpendicularly with respect to the longitudinal axis (4) of the quill (3) in the powerless, nondeflected state, and wherein the guide rods (5) have at the connection point (6) with the quill (3) and also at the connection point (6) with the machine frame (2) a solid-body joint (7) in order by way of this to render possible the periodic linear movement of the quill (3), **characterised in that** the flexibility of these solid-body joints is based on elasticity of their structures established by controlled thinning of the material.

2. A linear guide (1) according to claim 1, **characterised in that** the quill (3) has at least two bearing planes (8), wherein each bearing plane (8) is established from at least one guide rod (5), preferably from two guide rods (5) and particularly preferably from a plurality of guide rods (5).

3. A linear guide (1) according to claim 2, **characterised in that** in the direction of the longitudinal axis (4) of the quill (3) the at least two bearing planes (8) are at a large distance from each other in order to optimize the rigidity of the linear guide (1).

4. A linear guide (1) according to at least one of the afore-mentioned claims,
**characterised in that** the solid-body joints (7) have flexible beams (9) for an elastic movement, these being formed by recesses (10) introduced laterally with respect to the flexible beam (9).

5. A linear guide (1) according to at least one of the afore-mentioned claims,
**characterised in that** the recesses (10) have an elliptic, a circular, a square and/or a triangular contour.

6. A linear guide (1) according to at least one of the afore-mentioned claims,
**characterised in that** the solid-body joints (7) are constructed as leaf springs, with the flexible beam (9) changing over into the guide rod (5) in one piece.

7. A linear guide (1) according to at least one of the afore-mentioned claims,
**characterised in that** the guide rods (5) are connected to a compensating bridge (11), with at least one guide rod (5) being arranged between the compensating bridge (11) and the machine frame (2), and at least one guide rod (5) being arranged between the compensating bridge (11) and the quill (3).

8. A linear guide (1) according to at least one of the afore-mentioned claims,
**characterised in that** the solid-body joints (7) and/or the guide rods (5) are produced from a flat material, wherein the production includes a laser-beam separating process, an eroding process, a PECM or a water-jet cutting process.

9. A linear guide (1) according to at least one of the afore-mentioned claims,
**characterised in that** the periodic linear movement of the quill (3) is an oscillating movement, wherein the oscillating movement of the quill (3) has a stroke of < 5 mm.

10. A linear guide (1) according to claim 9,
**characterised in that** the oscillating movement of the quill (3) has a stroke of < 1 mm.

11. A linear guide (1) according to claim 9,
**characterised in that** the oscillating movement of the quill (3) has a stroke of < 0.1 mm.

12. A linear guide (1) according to claim 9,
**characterised in that** the oscillating movement of the quill (3) has a frequency of < 500 Hz.

13. A linear guide (1) according to claim 9,
**characterised in that** the oscillating movement of the quill (3) has a frequency of < 50 Hz.

14. A linear guide (1) according to claim 9,
**characterised in that** the oscillating movement of the quill (3) has a frequency of < 10 Hz.

15. A linear guide (1) according to at least one of the afore-mentioned claims,
**characterised in that** the solid-body joints (7) and/or the guide rods (5) comprise a metallic material from the group including a spring steel and preferably a high-quality steel.

## Revendications

1. Guide linéaire (1), en particulier pour un dispositif d'usinage électrochimique des métaux, qui guide un mouvement linéaire d'une douille (3) déplacée périodiquement dans un bâti de machine (2), afin de modifier périodiquement une fente de travail entre une cathode disposée sur la douille (3) et une pièce dans la direction de l'axe longitudinal (4) de la douille (3), dans lequel la douille (3) est reliée au bâti de machine (2) par plusieurs bielles (5), dans lequel les bielles (5) à l'état de repos non étendu sont disposées sensiblement perpendiculairement à l'axe longitudinal (4) de la douille (3) et dans lequel les bielles (5) présentent, au point de liaison (6) avec la douille (3) ainsi qu'au point de liaison (6) avec le bâti de machine (2) une articulation à corps solide (7), afin de permettre au moyen de celle-ci le mouvement linéaire périodique de la douille (3), **caractérisé en ce que** les souplesses de ces articulations à corps solide proviennent des élasticités de leurs structures, qui sont formées par un amincissement ciblé de la matière.

2. Guidage linéaire (1) selon la revendication 1, **caractérisé en ce que** la douille (3) présente au moins deux plans d'appui (8), dans lequel chaque plan d'appui (8) est formé par au moins une bielle (5), de préférence par deux bielles (5), et de préférence encore par une pluralité de bielles (5).

3. Guidage linéaire (1) selon la revendication 2, **caractérisé en ce que** les au moins deux plans d'appui (8) présentent une grande distance l'un par rapport à l'autre, dans la direction de l'axe longitudinal (4) de la douille (3), afin d'optimiser la rigidité du guidage linéaire (1).

4. Guidage linéaire (1) selon au moins une des revendications précédentes, **caractérisé en ce que** les articulations à corps solide (7) présentent des barrettes flexibles (9) pour un mouvement élastique, dans lequel celles-ci sont formées par des évidements (10) pratiqués latéralement à la barrette flexible (9).

5. Guidage linéaire (1) selon au moins une des revendications précédentes, **caractérisé en ce que** les évidements (10) présentent un contour elliptique, circulaire, carré et/ou triangulaire.

6. Guidage linéaire (1) selon au moins une des revendications précédentes, **caractérisé en ce que** les articulations à corps solide (7) sont réalisées sous la forme de ressort à lame, dans lequel la barrette flexible (9) se prolonge d'une seule pièce dans la bielle (5).

7. Guidage linéaire (1) selon au moins une des revendications précédentes, **caractérisé en ce que** les bielles (5) sont reliées à un pont d'équilibrage (11), dans lequel au moins une bielle (5) est disposée entre le pont d'équilibrage (11) et le bâti de machine (2) et au moins une bielle (5) est disposée entre le pont d'équilibrage (11) et la douille (3).

8. Guidage linéaire (1) selon au moins une des revendications précédentes, **caractérisé en ce que** les articulations à corps solide (7) et/ou les bielles (5) sont fabriquées à partir d'un matériau plat, dans lequel la fabrication comprend un procédé de découpage au faisceau laser, un procédé d'érosion, un procédé d'usinage électrochimique de précision ou un procédé de coupe par jet d'eau.

9. Guidage linéaire (1) selon au moins une des revendications précédentes, **caractérisé en ce que** le mouvement linéaire périodique de la douille (3) est un mouvement d'oscillation, dans lequel le mouvement d'oscillation de la douille (3) présente une course inférieure à 5 mm.

10. Guidage linéaire (1) selon la revendication 9, **caractérisé en ce que** le mouvement d'oscillation de la douille (3) présente une course inférieure à 1 mm.

11. Guidage linéaire (1) selon la revendication 9, **caractérisé en ce que** le mouvement d'oscillation de la douille (3) présente une course inférieure à 0,1 mm.

12. Guidage linéaire (1) selon la revendication 9, **caractérisé en ce que** le mouvement d'oscillation de la douille (3) présente une fréquence inférieure à 500 Hz.

13. Guidage linéaire (1) selon la revendication 9, **caractérisé en ce que** le mouvement d'oscillation de la douille (3) présente une fréquence inférieure à 50 Hz.

14. Guidage linéaire (1) selon la revendication 9, **caractérisé en ce que** le mouvement d'oscillation de la douille (3) présente une fréquence inférieure à 10 Hz.

15. Guidage linéaire (1) selon au moins une des revendications précédentes, **caractérisé en ce que** les articulations à corps solide (7) et/ou les bielles (5) présentent un matériau métallique du groupe comprenant un acier à ressort et de préférence un acier inoxydable.
